# EUROPEAN PATENT SPECIFICATION

(11) **EP 4 237 242 B1**
(45) Date of publication and mention of the grant of the patent: **10.09.2025**
(21) Application number: 21887044.2
(22) Date of filing: 02.11.2021
(51) Int. Cl.: B32B 5/12, B27D 1/04, B32B 1/08, B32B 21/13, B32B 21/14, E04C 3/12, E04H 12/04, F03D 13/20, B32B 5/02, B32B 21/10, B32B 21/04, B27D 1/08, B32B 7/03, B32B 7/12

(54) **METHOD FOR PRODUCING A LAMINATED VENEER LUMBER BOARD**
VERFAHREN ZUR HERSTELLUNG EINER FURNIERSCHICHTPLATTE
PROCÉDÉ DE FABRICATION D'UNE PLAQUE DE BOIS EN PLACAGE STRATIFIÉ

(30) Priority: 02.11.2020 SE 2051271
(43) Date of publication of application: 06.09.2023
(73) Proprietor: Modvion AB, 422 46 Hisings Backa (SE)
(72) Inventor: OLIVEGREN, David, 414 75 Göteborg (SE); DÖLERUD, Erik, 413 15 Göteborg (SE); SÖDERIN, Geir, 414 72 Göteborg (SE)
(74) Representative: Zacco Sweden AB
(86) International application number: PCT/SE2021/051094
(87) International publication number: WO 2022/093103

(56) References cited:
- EP-A1- 3 543 000
- EP-A2- 0 532 376
- WO-A1-2007/117195
- WO-A1-2015/185789
- WO-A1-2017/058095
- WO-A1-2020/149784
- CN-A- 106 078 943
- JP-A- 2016 087 816
- US-A- 2 223 587
- US-A- 3 312 582
- US-A1- 2016 222 657
- US-A1- 2019 226 447

## Description

### TECHNICAL FIELD

The present invention relates to a method for producing a Laminated Veneer Lumber (LVL) board comprising a plurality of veneer plies. The LVL board is used in curved laminated wooden modules comprising a plurality of laminated veneer lumber boards.

### BACKGROUND ART

Wood is used for several different constructions and buildings. Wood may either be used as planks or beams sawn in one piece, but is often laminated in one way or the other. One common structural wood element is glued laminated timber (glulam), which consists of layers of dimensional lumber bonded together. These may be used as vertical columns, horizontal beams or arches. Another type of laminated wood is plywood, which consists of a plurality of cross-laminated veneer plies glued to each other. A plywood board is strong, dimension stable and does not warp or bend. Sometimes, bent laminated veneer materials are used, e.g. in chairs or other smaller objects, where the lamination is done by placing a number of separate veneer layers in a mould and gluing them together in the desired shape in order to obtain the laminated part. This is time consuming and work intensive.

There is thus room for an improved laminated veneer lumber board adapted to be used for curved objects.

Patent publication US 2,223,587 A discloses a method of producing a multiple-ply wood veneer member whose surface is curved in two directions transverse to each other.

### DISCLOSURE OF INVENTION

An object of the invention is to provide a curved laminated wood module comprising a plurality of laminated veneer lumber boards. An object of the invention is therefore to provide a method for producing a laminated veneer lumber board that can be bent. A further object of the invention is to provide a laminated veneer lumber board that can be bent.

The solution to the problem according to the invention is described in the characterizing part of claim 1 for the method of producing a curved laminated wood module, and in claim 9 for a curved laminated wood module. The other claims contain advantageous embodiments and further developments of the method for producing a laminated veneer lumber board.

In a method for producing curved laminated wood modules in which a plurality of laminated veneer lumber boards are laminated to each other to form a curved laminated wood module where the laminated veneer lumber board comprises a single position having a veneer ply with the wood grain directed in a cross direction which allows the laminated veneer lumber board to be bent, the steps of; cutting a plurality of veneer plies; placing a first part of a first set of veneer plies in a mould with the wood grain directed in a first direction, where the first part comprises at least two veneer plies; placing a second set of veneer plies comprising a single veneer ply or two veneer plies arranged adjacent each other with the wood grain directed in a direction that is perpendicular to the first direction on the first part; placing a second part of the first set of veneer plies with the wood grain directed in the first direction on the second set of veneer plies; gluing and pressing the veneer plies to each other to form the laminated veneer lumber board are comprised.

By this first embodiment, a laminated veneer lumber board that can be bent to curved shapes without breaking is provided. By providing the laminated veneer lumber board with a single position having a veneer ply with the wood grain directed in a cross direction, it will be possible to bend the laminated veneer lumber board without breaking the crosswise veneer ply. In this case, the laminated veneer lumber board will be bent around the first direction, which is also the longitudinal direction of the laminated veneer lumber board. By using a first set of plies with the wood grain directed in a first direction, where the first set of plies comprises two parts, and a second set of plies comprising one veneer ply or two veneer plies arranged adjacent each other with the wood grain directed in a direction perpendicular to the first direction arranged between the first part and the second part, a laminated veneer lumber board that can be bent to a desired shape without breaking or ripping any of the veneer plies is provided. The crosswise arranged second set of veneer ply or plies may be positioned at any position in the laminated veneer lumber board. In one example, the crosswise second set is arranged in the middle of the laminated veneer lumber board, where the first part and the second part of the first set of plies comprises the same number of veneer plies. By producing the laminated veneer lumber board in a symmetric manner, where the first part and the second part of the first set of plies comprises an equal amount if plies, it is easier to produce the laminated veneer lumber board with a regular production method for laminated veneer lumber boards. However, with minor modifications, the crosswise second set of veneer plies can be positioned at any desired position in the laminated veneer lumber board.

In most examples, a laminated veneer lumber board consists of a plurality of veneer plies arranged with the wood grain in the same direction. Some laminated veneer lumber board may also comprise a few veneer plies arranged in a crosswise direction, where the veneer plies are arranged spaced apart from each other. The purpose of this is to reduce the risk of bending or warping of the laminated veneer lumber board. The reason to position all or most veneer plies in the same direction is to use the load bearing properties of the veneer plies when arranged in the same direction. This is different to plywood, where the wood grain of every other ply is directed in a perpendicular direction. Such a plywood board will not bend, but will also not be as strong as a laminated veneer lumber board in some directions.

The purpose of the invention is to provide a laminated veneer lumber board that can be used to laminate several boards to each other in a desired shape, such that a curved construction element comprising several laminated veneer lumber boards is obtained. This construction element will be strong and dimension stable, and can be produced in a rational manner, since each laminated veneer lumber board can be produced in a regular laminated veneer lumber board manufacturing line.

The laminated veneer lumber board comprises a second set of veneer plies with one or two veneer plies arranged adjacent each other. The second set of veneer plies may be arranged at any position of the laminated veneer lumber board, e.g. in the middle of the laminated veneer lumber board, with two, three or more veneer plies arranged on each side of the second set of veneer plies. The second set of veneer plies may comprise one veneer ply arranged with the wood grain direction perpendicular to the first direction, i.e. to the wood grain direction of the first set of veneer plies. The second set of veneer plies may also comprise two veneer plies arranged with the wood grain direction in the same direction and where the wood grain direction of the two veneer plies is perpendicular to the first direction, i.e. to the wood grain direction of the first set of veneer plies.

In one example, the laminated veneer lumber board is symmetric and comprises an even number of veneer plies. In this case, the second set of veneer plies comprises two veneer plies arranged adjacent each other. This will balance the layout of the board during production, and will simplify the production of the laminated veneer lumber board boards. In an example where the laminated veneer lumber board comprises a total of eight veneer plies, the second set of veneer plies is arranged with three veneer plies on each side.

In another example, the laminated veneer lumber board is symmetric and comprises an odd number of veneer plies. In this case, the second set of veneer plies comprises a single veneer ply arranged in the middle of the laminated veneer lumber board. This will balance the layout of the board during production, and will simplify the production of the laminated boards. In an example where the laminated veneer lumber board comprises a total of nine veneer plies, the second set of plies is arranged with four veneer plies on each side.

A laminated veneer lumber board may preferably comprise between seven to twelve veneer plies, even if other numbers are also possible. These numbers give a good balance between productivity and usability when creating curved laminated wooden structures comprising several laminated veneer lumber boards. The total number of veneer plies in an LVL board may e.g. depend on the required thickness of a curved laminated wood module and on the production process. A thinner laminated veneer lumber board is easier to bend, but more separate laminated veneer lumber boards have to be handled and bent which takes more time. A wooden structure such as a curved laminated wood module will preferably comprise at least five laminated veneer lumber boards. A wooden structure is preferably circumferential with a closed periphery, e.g. a circular structure such as a tower, or a closed curved structure such as a rotor blade. A closed structure will be rigid enough even though the wood grain of most of the veneer plies are directed in the same direction.

One advantage of the invention is that curved laminated wood modules can be manufactured at a production plant in a rational manner from laminated veneer lumber boards under controlled environmental conditions. The curved laminated wood modules can then be transported to a site for e.g. a wind turbine plant where the curved laminated wood modules may be assembled to circular sections and then to a laminated wood tower. The curved laminated wood modules can be manufactured such that they will fit on an ordinary truck, which allows for an easy transport of the curved laminated wood modules. Further, the weight of a curved laminated wood module is relatively low, which simplifies the transport to remote areas where the roads are often of low quality or non-existent.

A curved laminated wood module is preferably formed by laminating a plurality of laminated veneer lumber boards in a press comprising a curved mould and with a pressing method performed at an ambient temperature.

It is also possible to provide a laminated veneer lumber board with an additional outer layer, e.g. another fibre composite material such as a glass fibre or carbon fibre ply or a surface treatment material. This may be of advantage if the board will be the outermost layer in a curved laminated wood module. In one example, one of the veneer plies of the board is replaced with an additional layer of another material, e.g. another fibre composite material such as a glass fibre or carbon fibre ply. This may increase the stiffness or the load carrying properties of a board. The additional outer layer may be applied before or after a laminated veneer lumber board is ready.

Wood, and especially spruce, pine or birch, is a cheap and strong material suitable to be used for laminating boards from thin veneer plies. Other fibres may also be used, such as bamboo fibres, which may be laminated into boards with the fibres in a desired direction.

In a curved laminated wood module, several laminated veneer lumber boards are laminated to each other to form the curved laminated wood module. A curved laminated wood module may e.g. comprise nine laminated veneer lumber boards, where each LVL board may comprise e.g. seven veneer plies. In this example, the curved laminated wood module will comprise a total of 63 veneer plies.

The laminated veneer lumber boards are preferably laminated to each other in a press to form a curved laminated wood module. The curved laminated wood module is e.g. formed by nine laminated veneer lumber boards. When a curved laminated wood module has been pressed together, the rabbets or other joints and the side surfaces may thereafter be shaped by a precision router, such that relatively small tolerances are obtained.

### BRIEF DESCRIPTION OF DRAWINGS

The invention will be described in greater detail in the following, with reference to the embodiments that are shown in the attached drawings, in which
- Fig. 1: shows an example of a laminated veneer lumber board produced by the method according to the invention,
- Fig. 2a-b: show examples of veneer layouts for a laminated veneer lumber board according to the invention, and
- Fig. 3: shows an example of a curved laminated wood module comprising a plurality of laminated veneer lumber boards.

### MODES FOR CARRYING OUT THE INVENTION

The embodiments of the invention with further developments described in the following are to be regarded only as examples and are in no way to limit the scope of the protection provided by the patent claims.

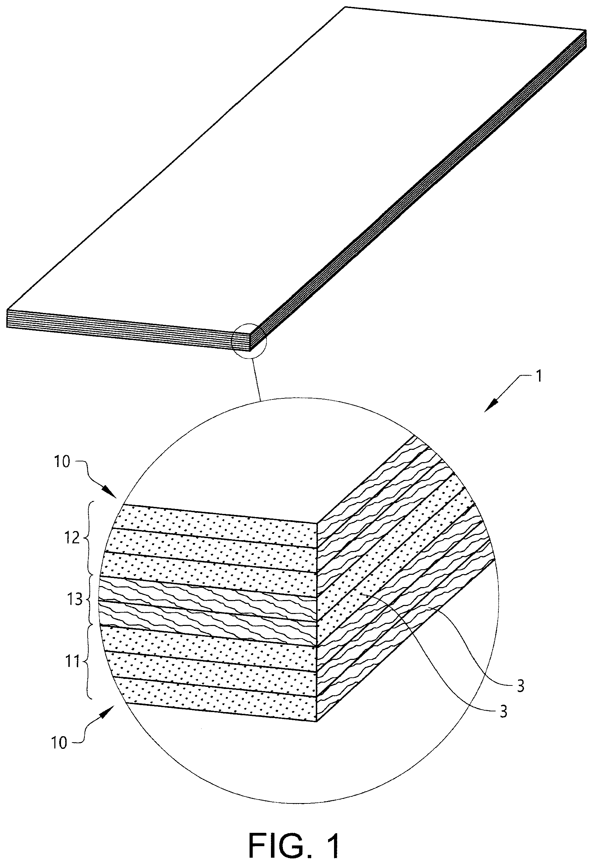

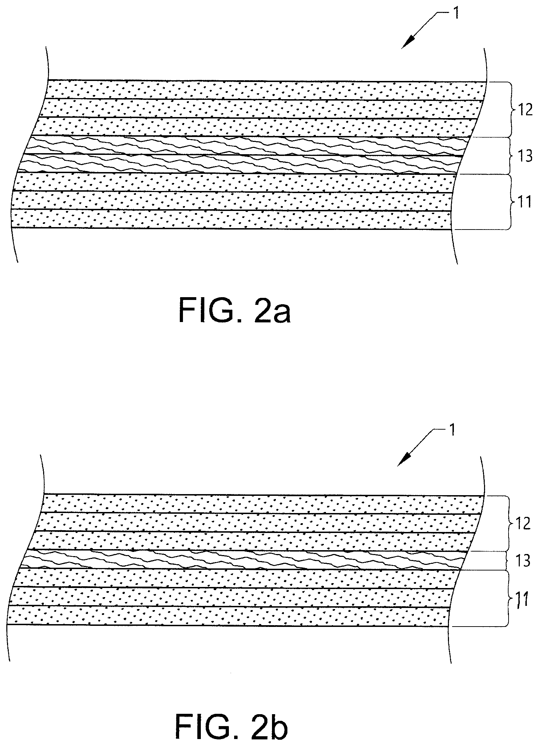

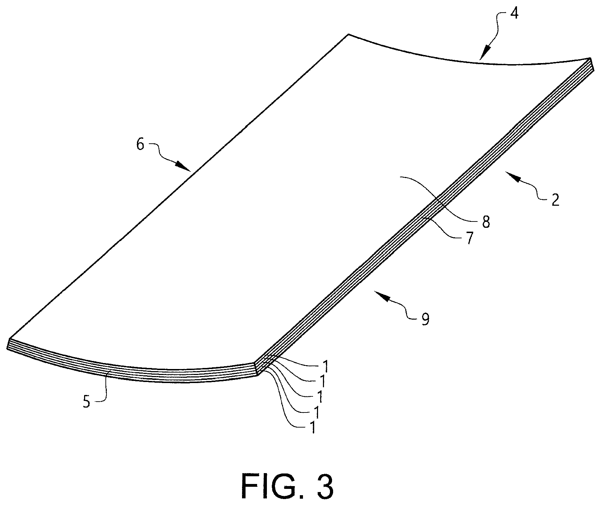

Fig. 1 shows a first example of a laminated veneer lumber board, Figs. 2a and 2b show examples of the layout of a laminated veneer lumber board, and Fig. 3 shows an example of a curved laminated wood module.

Fig. 1 shows a first example of a laminated veneer lumber (LVL) board 1 produced by the method. The LVL board comprises two sets of veneer plies 3, a first set 10 of veneer plies and a second set 13 of veneer plies. In the first set 10 of veneer plies, the direction of the wood fibres of all the veneer plies 3 are directed in the same direction. The first set 10 of veneer plies contain most of the plies, and preferably at least 80% of the number of plies. The second set 13 of veneer plies comprises in the shown example two veneer plies arranged adjacent each other with the direction of the wood fibres directed in a perpendicular direction when compared to the first set of veneer plies. In the shown example, the LVL board comprises eight veneer plies. A typical LVL board is between 2 - 5 meters wide and between 10 - 30 meters long.

The second set 13 of veneer plies may comprise a single veneer ply or two veneer plies arranged adjacent each other, or may comprise a single thicker veneer ply. The second set of veneer plies may comprise one veneer ply arranged with the wood grain direction perpendicular to the first direction, i.e. to the wood grain direction of the first set of veneer plies. The second set of veneer plies may also comprise two veneer plies arranged with the wood grain direction in the same direction and where the wood grain direction of the two veneer plies is perpendicular to the first direction, i.e. to the wood grain direction of the first set of veneer plies.

The second set 13 of veneer plies, i.e. the set of veneer plies having a wood grain direction that differs from the direction of the wood grains of the first set 10 of veneer plies of the laminated veneer lumber board, is in one example arranged in the middle of the laminated veneer lumber board. The laminated veneer lumber board in this example thus comprises a first part 11 of the first set 10 of veneer plies having three veneer plies with the wood grain direction arranged in a first direction, a second set 13 of veneer plies having two veneer plies with the wood grain direction arranged in a cross direction, perpendicular to the first direction, and a second part 12 of the first set 10 of veneer plies having three veneer plies with the wood grain direction arranged in the first direction.

The number of veneer plies in an LVL board may vary. A suitable number of veneer plies in an LVL board may e.g. be in the range between 7 to 15 veneer plies and may depend on the required thickness of the LVL board and on the production process. It is important that there is only one position in which one or more plies are arranged with the wood grain direction having a direction that differs from the first direction. If two or more plies are used, they must be arranged adjacent each other. Using a single set of plies arranged in a direction that differs from the first direction will strengthen the laminated veneer lumber board and will still allow the laminated veneer lumber board to be bent to a curved shape. A regular board having every other ply arranged crosswise will not be possible to bend without breaking at least some of the veneer plies or the complete board.

Figs. 2a and 2b show examples of a laminated veneer lumber board adapted to be used for curved laminated wood modules comprising a plurality of laminated veneer lumber boards. The laminated veneer lumber board in Fig. 2a comprises eight veneer plies, and the second set of plies 13 comprises two veneer plies. In Fig. 2a, the first part 11 of the first set of veneer plies 10 comprises three veneer plies, and the second part 12 of the first set of veneer plies 10 also comprises three veneer plies.

The laminated veneer lumber board shown in Fig. 2b comprises seven veneer plies, and the second set of veneer plies 13 comprises a single veneer ply. In Fig. 2b, the first part 11 of the first set of veneer plies 10 comprises three veneer plies, and the second part 12 of the first set of veneer plies 10 also comprises three veneer plies. These shown laminated veneer lumber boards are symmetrical, which may be of advantage when producing a laminated veneer lumber board. Here, laminated veneer lumber boards comprising seven or eight veneer plies are shown, but other numbers of veneer plies are plausible.

When producing a curved laminated wood module 2 of a plurality of laminated veneer lumber boards, the laminated veneer lumber boards are pressed together in a glue press, where the final shape of the curved laminated wood module is obtained. When a curved laminated wood module has been glued together and the glue has cured, the edges of the curved laminated wood module may thereafter be shaped to the desired shape, e.g. to plane surfaces, by a precision router or a saw, such that relatively small tolerances are obtained. Other shapes such as rabbets or other joints are conceivable. The small tolerances help to improve the stiffness and rigidity of an assembled product. By precision routing the joint surfaces, the end surfaces of each layer can also be used to strengthen the joint.

Fig. 3 shows a curved laminated wood module 2 comprising five laminated veneer lumber boards 1 laminated to each other to form the curved laminated wood module 2. The curved laminated wood module is provided with an upper edge 4, a lower edge 5, a first side edge 6, a second side edge 7, an inner surface 8 and an outer surface 9. The shown curved laminated wood module is curved in a radial direction and straight in a longitudinal direction. A projection of a curved laminated wood module from the outer surface will resemble a rectangle where the long sides are either parallel or somewhat inclined. Curved laminated wood modules may be used for straight wooden assemblies, such as storage tanks or tubes, or for a laminated wood tower having a shape of a truncated cone. The radius of a curved laminated wood module is larger than 1 meter.

The laminated wood modules may be joined with different kinds of joints. The side edges may e.g. be provided with a tongue or a groove, such that a tongue and groove joint is obtained between two adjacent curved laminated wood modules. It is e.g. possible to provide the side edges with a double or stepped rabbet, such that a rabbet is provided with two rabbet edges provided at different heights, and two rabbet bottoms provided at different widths. Glue and screws may be used to connect two curved laminated wood modules to each other.

A curved laminated wood module will comprise wooden LVL boards where a single set of veneer plies is oriented in a different direction, i.e. where the wood fibres are directed in a different direction. This is often referred to as cross lamination. In cross lamination, one veneer ply or more veneer plies will be directed in another direction, normally 90 degrees when flat boards are manufactured. The longitudinal veneer plies, i.e. the plies having the wood grains oriented in a first direction, may e.g. mainly handle vertical loads, both pushing and pulling loads. The cross veneer ply or plies will help to handle twisting loads acting e.g. on a tower. Since all veneer plies are securely attached to each other, the wooden sections will be able to handle high loads in different directions.

A laminated veneer lumber board is made from several veneer plies of thin wood. A veneer ply may be e.g. 3 mm thick, and with eight veneer plies a 24 mm thick LVL board is obtained. By using nine LVL boards, a curved laminated wood module being 216 mm thick can be obtained. The number of used laminated veneer lumber boards and the number of veneer plies in a laminated veneer lumber board depends on the forces that the final construction must handle. A typical laminated wood module may e.g. be 20 - 40 cm thick or more.

Curved laminated wood modules 2 may be mounted to each other to form a circular section. Circular sections may be mounted to each other to form a laminated wood tower. The horizontal joints between two circular sections may also be made in different ways, e.g. by offsetting the layers of the curved laminated wood modules. The joints may be glued and screwed together, e.g. by using metal plates.

It is also possible to provide a laminated veneer lumber board with an additional outer layer, e.g. another fibre composite material such as a glass fibre or carbon fibre ply or a surface treatment material. This may be of advantage if the laminated veneer lumber board will be the outermost layer in a curved laminated wood module. In one example, one of the veneer plies of the laminated veneer lumber board is replaced with a layer of another material, e.g. another fibre composite material such as a glass fibre or carbon fibre ply. This may increase the stiffness or the load carrying properties of a laminated veneer lumber board. The additional layer may be applied before or after a laminated veneer lumber board has cured.

Wood, and especially spruce, pine or birch, is a cheap and strong material suitable to be used for laminating boards from thin veneer plies. Other fibres may also be used, such as bamboo fibres, which may be laminated into boards with the fibres in a desired direction.

The invention is not to be regarded as being limited to the embodiments described above, a number of additional variants and modifications being possible within the scope of the subsequent patent claims.

### REFERENCE SIGNS

- 1:: Laminated veneer lumber board
- 2:: Curved laminated wood module
- 3:: Veneer ply
- 4:: Upper edge
- 5:: Lower edge
- 6:: First side edge
- 7:: Second side edge
- 8:: Inner surface
- 9:: Outer surface
- 10:: First set of veneer plies
- 11:: First part of first set of veneer plies
- 12:: Second part of first set of veneer plies
- 13:: Second set of veneer plies

## Claims

1. Method for producing a curved laminated wood module (2) in which a plurality of laminated veneer lumber boards (1) are laminated to each other to form the curved laminated wood module (2), where the laminated veneer lumber board (1) comprises a single position having a veneer ply (3) with the wood grain directed in a cross direction which allows the laminated veneer lumber board to be bent, where the method comprises the steps of; cutting a plurality of veneer plies (3), placing a first part (11) of a first set of veneer plies (10) in a mould with the wood grain directed in a first direction, where the first part (11) comprises at least two veneer plies (10), placing a second set of veneer plies (13) comprising a single veneer ply (12) or two veneer plies (12) arranged adjacent each other with the wood grain directed in a direction that is perpendicular to the first direction on the first part (11), placing a second part (12) of the first set of veneer plies (10) with the wood grain directed in the first direction on the second set of veneer plies (13), gluing and pressing the veneer plies to each other to form the laminated veneer lumber board (1), gluing and pressing together a plurality of laminated veneer lumber boards (1) to produce the curved laminated wood module (2).

2. Method according to claim 1, wherein the second part (12) comprises the same number of veneer plies as the first part (11),

3. Method according to claim 1 or 2, wherein the first set of veneer plies (10) comprises at least six veneer plies (3).

4. Method according to any of claims 1 to 3, wherein the first set of veneer plies (10) comprises eight veneer plies and the second set of veneer plies (13) comprises a single veneer ply (3).

5. Method according to any of claims 1 to 4, wherein the thickness of a veneer ply is between 1 - 5 mm.

6. Method according to any of claims 1 to 5, wherein the laminated lumber board (1) further comprises an outer layer of a different material.

7. Method according to claim 6, wherein the outer layer is applied after the first set of veneer plies (10) and the second set of veneer plies (13) have been pressed and glued together.

8. Method according to claim 6, wherein the outer layer is applied before the first set of veneer plies (10) and the second set of veneer plies (13) have been pressed and glued together.

9. Curved laminated wood module (2) comprising a plurality of laminated veneer lumber boards (1) that are glued and pressed together, wherein the laminated veneer lumber boards (1) comprise a first set of veneer plies (10) and a second set of veneer plies (13), wherein the wood grain direction of the first set of veneer plies (10) is directed in a first direction and that the wood grain direction of the second set of veneer plies (13) is directed in a direction perpendicular to the first direction, where a first part (11) of the first set of veneer plies (10) is placed on one side of the second set of veneer plies (13) and where a second part (12) of the first set of veneer plies (10) is placed on the other side of the second set of veneer plies (13), where the first part (11) comprises at least two veneer plies (10), where the second set of veneer plies (13) comprises a single veneer ply (3) or two veneer plies (3) arranged adjacent each other, **characterized in that** the curved laminate wood module (2) is produced by a method according to any of claims 1 to 8.

10. Curved laminated wood module (2) according to claim 9, wherein the second part (12) comprises the same number of veneer plies as the first part (11).

11. Curved laminated wood module (2) according to claim 9 or 10, wherein the first set of veneer plies (10) comprises eight veneer plies and the second set of veneer plies (13) comprises a single veneer ply.

12. Curved laminated wood module (2) according to any of claims 9 to 11, wherein the curved laminated wood module (2) comprises at least seven laminated veneer lumber boards (1).

## Patentansprüche

1. Verfahren zum Herstellen eines gebogenen Schichtholzmoduls (2), wobei eine Mehrzahl von Furnierschichtplatten (1) aneinander geschichtet werden, um das gebogene Schichtholzmodul (2) zu bilden, wobei die Furnierschichtplatte (1) eine einzelne Position mit einer Furnierlage (3) umfasst, wobei die Holzmaserung in eine Querrichtung ausgerichtet ist, wodurch ein Biegen der Furnierschichtplatte möglich ist, wobei das Verfahren die Schritte umfasst; Schneiden einer Mehrzahl von Furnierlagen (3), Platzieren eines ersten Teils (11) eines ersten Satzes von Furnierlagen (10) in einem Formteil, wobei die Holzmaserung in einer ersten Richtung ausgerichtet ist, wobei der erste Teil (11) zumindest zwei Furnierlagen (10) umfasst, Platzieren eines zweiten Satzes von Furnierlagen (13), der eine einzelne Furnierlage (12) oder zwei Furnierlagen (12) umfasst, die aneinander angrenzend angeordnet sind, wobei die Holzmaserung in einer Richtung senkrecht zu der ersten Richtung auf dem ersten Teil (11) ausgerichtet ist, Platzieren eines zweiten Teils (12) des ersten Satzes von Furnierlagen (10), wobei die Holzmaserung in der ersten Richtung ausgerichtet ist, auf dem zweiten Satz von Furnierlagen (13), Verkleben und Verpressen der Furnierlagen miteinander, um die Furnierschichtplatte (1) zu bilden, Verkleben und Verpressen einer Mehrzahl von Furnierschichtplatten (1) miteinander, um das gebogene Schichtholzmodul (2) herzustellen.

2. Verfahren nach Anspruch 1, wobei der zweite Teil (12) die gleiche Anzahl von Furnierlagen wie der erste Teil (11) umfasst,

3. Verfahren nach Anspruch 1 oder 2, wobei der erste Satz von Furnierlagen (10) mindestens sechs Furnierlagen (3) umfasst.

4. Verfahren nach einem der Ansprüche 1 bis 3, wobei der erste Satz von Furnierlagen (10) acht Furnierlagen umfasst und der zweite Satz von Furnierlagen (13) eine einzelne Furnierlage (3) umfasst.

5. Verfahren nach einem der Ansprüche 1 bis 4, wobei die Dicke einer Furnierlage zwischen 1 und 5 mm beträgt.

6. Verfahren nach einem der Ansprüche 1 bis 5, wobei die Schichtholzplatte (1) ferner eine Außenschicht aus einem anderen Material umfasst.

7. Verfahren nach Anspruch 6, wobei die Außenschicht aufgebracht wird, nachdem der erste Satz von Furnierlagen (10) und der zweite Satz von Furnierlagen (13) miteinander verpresst und verklebt wurden.

8. Verfahren nach Anspruch 6, wobei die Außenschicht aufgebracht wird, bevor der erste Satz von Furnierlagen (10) und der zweite Satz von Furnierlagen (13) miteinander verpresst und verklebt werden.

9. Gebogenes Schichtholzmodul (2), das eine Mehrzahl von Furnierschichtplatten (1) umfasst, die verklebt und verpresst sind, wobei die Furnierschichtplatten (1) einen ersten Satz von Furnierlagen (10) und einen zweiten Satz von Furnierlagen (13) umfassen, wobei die Holzmaserungsrichtung des ersten Satzes von Furnierlagen (10) in einer ersten Richtung ausgerichtet ist und die Holzmaserungsrichtung des zweiten Satzes von Furnierlagen (13) in einer Richtung senkrecht zu der ersten Richtung ausgerichtet ist, wobei ein erster Teil (11) des ersten Satzes von Furnierlagen (10) auf einer Seite des zweiten Satzes von Furnierlagen (13) platziert ist und wobei ein zweiter Teil (12) des ersten Satzes von Furnierlagen (10) auf der anderen Seite des zweiten Satzes von Furnierlagen (13) platziert ist, wobei der erste Teil (11) zumindest zwei Furnierlagen (10) umfasst, wobei der zweite Satz von Furnierlagen (3) eine einzelne Furnierlage (3) oder zwei Furnierlagen (3) umfasst, die aneinander angrenzend angeordnet sind, ***dadurch gekennzeichnet,* dass** das gebogene Schichtholzmodul (2) mit einem Verfahren nach einem der Ansprüche 1 bis 8 hergestellt wird.

10. Gebogenes Schichtholzmodul (2) nach Anspruch 9, wobei der zweite Teil (12) die gleiche Anzahl von Furnierlagen wie der erste Teil (11) umfasst.

11. Gebogenes Schichtholzmodul (2) nach Anspruch 9 oder 10, wobei der erste Satz von Furnierlagen (10) acht Furnierlagen umfasst und der zweite Satz von Furnierlagen (13) eine einzelne Furnierlage umfasst.

12. Gebogenes Schichtholzmodul (2) nach einem der Ansprüche 9 bis 11, wobei das gebogene Schichtholzmodul (2) mindestens sieben Furnierschichtplatten (1) umfasst.

## Revendications

1. Procédé de fabrication d'un module de bois stratifié courbé (2) dans lequel plusieurs plaques de bois en placage stratifié (1) sont stratifiées les unes aux autres pour former le module de bois stratifié courbé (2), dans lequel la plaque de bois en placage stratifié (1) comprend une seule position ayant un pli de placage (3) avec le grain de bois dirigé dans une direction transversale qui permet à la plaque de bois en placage stratifié d'être pliée, où le procédé comprend les étapes suivantes : la découpe d'une pluralité de plis de placage (3), le placement d'une première partie (11) d'un premier ensemble de plis de placage (10) dans un moule avec le grain de bois dirigé dans une première direction, où la première partie (11) comprend au moins deux plis de placage (10), le placement d'un deuxième ensemble de plis de placage (13) comprenant un seul pli de placage (12) ou deux plis de placage (12) disposés de manière adjacente l'un à l'autre, le grain de bois étant dirigé dans une direction perpendiculaire à la première direction sur la première partie (11) ; le placement d'une deuxième partie (12) du premier ensemble de plis de placage (10), le grain de bois étant dirigé dans la première direction sur le deuxième ensemble de plis de placage (13) ; le collage et le pressage des plis de placage les unes contre les autres pour former la plaque de bois en placage stratifié (1), le collage et le pressage ensemble d'une pluralité de plaques de bois en placage stratifié (1) pour produire le module de bois stratifié courbé (2).

2. Procédé selon la revendication 1, dans lequel la deuxième partie (12) comprend le même nombre de plis de placage que la première partie (11),

3. Procédé selon la revendication 1 ou 2, dans lequel le premier ensemble de plis de placage (10) comprend au moins six plis de placage (3).

4. Procédé selon l'une quelconque des revendications 1 à 3, dans lequel le premier ensemble de plis de placage (10) comprend huit plis de placage et le deuxième ensemble de plis de placage (13) comprend un seul pli de placage (3).

5. Procédé selon l'une quelconque des revendications 1 à 4, dans lequel l'épaisseur d'un pli de placage est comprise entre 1 et 5 mm.

6. Procédé selon l'une quelconque des revendications 1 à 5, dans lequel la plaque de bois stratifié (1) comprend en outre une couche extérieure d'un matériau différent.

7. Procédé selon la revendication 6, dans lequel la couche extérieure est appliquée après que le premier ensemble de plis de placage (10) et le deuxième ensemble de plis de placage (13) ont été pressés et collés ensemble.

8. Procédé selon la revendication 6, dans lequel la couche extérieure est appliquée avant que le premier ensemble de plis de placage (10) et le deuxième ensemble de plis de placage (13) aient été pressés et collés ensemble.

9. Module de bois stratifié courbé (2) comprenant une pluralité de plaques de bois en placage stratifié (1) qui sont collés et pressés ensemble, dans lequel les plaques de bois en placage stratifié (1) comprennent un premier ensemble de plis de placage (10) et un deuxième ensemble de plis de placage (13), dans lequel la direction de grain de bois du premier ensemble de plis de placage (10) est dirigée dans une première direction et la direction de grain de bois du deuxième ensemble de plis de placage (13) est dirigée dans une direction perpendiculaire à la première direction, où une première partie (11) du premier ensemble de plis de placage (10) est placée d'un côté du deuxième ensemble de plis de placage (13) et où une deuxième partie (12) du premier ensemble de plis de placage (10) est placée de l'autre côté du deuxième ensemble de plis de placage (13), où la première partie (11) comprend au moins deux plis de placage (10), où le deuxième ensemble de plis de placage (13) comprend un seul pli de placage (3) ou deux plis de placage (3) disposés de manière adjacente l'un à l'autre, **caractérisé en ce que** le module de bois stratifié courbé (2) est produit par un procédé selon l'une quelconque des revendications 1 à 8.

10. Module de bois stratifié courbé (2) selon la revendication 9, dans lequel la deuxième partie (12) comprend le même nombre de plis de placage que la première partie (11).

11. Module de bois stratifié courbé (2) selon la revendication 9 ou 10, dans lequel le premier ensemble de plis de placage (10) comprend huit plis de placage et le deuxième ensemble de plis de placage (13) comprend un seul pli de placage.

12. Module de bois stratifié courbé (2) selon l'une quelconque des revendications 9 à 11, dans lequel le module de bois stratifié courbé (2) comprend au moins sept plaques de bois en placage stratifié (1).
